# FASCICULE DE BREVET EUROPEEN

(11) **EP 1 524 370 B1**
(45) Date de publication et mention de la délivrance du brevet: **16.08.2006**
(21) Numéro de dépôt: 04360092.3
(22) Date de dépôt: 15.10.2004
(51) Int. Cl.: E02B 13/02, E03D 1/16, E03F 1/00

(54) **Dispositif d'alimentation séquencée pour eaux brutes destiné à être utilisé dans les installations d'épuration**
Vorrichtung für sequentielle Abwasserzufuhr zum Gebrauch in Kläranlagen
Sequenced waste water feeder for use in waste water treatment plants

(30) Priorité: 15.10.2003 FR 0312047
(43) Date de publication de la demande: 20.04.2005
(73) Titulaire: Alistep S.A.R.L, 87110 Le Vigen (FR)
(72) Inventeur: Bataille, Rémi, 87340 St-Laurent-les-Eglises (FR)
(74) Mandataire: Rhein, Alain

(56) Documents cités:
- FR-A- 2 690 955
- US-A- 5 290 434

## Description

La présente invention a pour objet un dispositif d'alimentation séquencée pour eaux brutes destiné à être utilisé dans les installations d'épuration.

Dans les installations d'épuration biologique les eaux usées arrivent dans la station de manière irrégulière et sous faible débit. Elles doivent pourtant être réparties sur l'ensemble des filtres de manière uniforme. A cette fin elles sont stockées temporairement dans une cuve, puis envoyées sous fort débit à la surface des filtres par l'intermédiaire d'un réseau de canalisation alimenté par dispositif d'alimentation séquencée.

Ces dispositifs d'alimentation séquencée utilisés dans les installations d'épuration biologique peuvent se présenter sous différentes formes, ils peuvent être à auget ou à clapet, ou encore à siphon auto-amorçant, ces derniers étant les plus performants.

Des dispositifs d'alimentation séquencée à siphon auto-amorçant sont décrits dans les documents FR 2.774.110, US 5.290.434 et FR 2.690.955. Ces dispositifs fonctionnent selon le principe des chasses d'eau décrites dans les documents US 2.965.122 et FR 833.894, à savoir qu'ils comportent dans une cuve de stockage sur un ensemble mobile, un conduit principal de vidange dont une extrémité est aboutée à un raccord souple tandis que l'autre est associée à un flotteur submersible. Lors de la montée du niveau de liquide dans la cuve, le flotteur s'élève et entraîne l'extrémité libre du conduit. Arrivé à un certain niveau, le flotteur se remplit de liquide puis coule en amorçant le siphon, provoquant ainsi la vidange en continu de la cuve. Le conduit est coudé, coude vers le haut, afin que son ouverture d'entrée du liquide soit apte à affleurer le fond pour permettre l'aspiration d'un maximum de liquide.

Par ailleurs, ces dispositifs comportent une butée ajustable en hauteur destinée à bloquer la progression du flotteur, et à provoquer son remplissage, permettant ainsi de régler le seuil de déclenchement du siphonnage.

Dans le mode de réalisation décrit dans le document FR 2.690.955, il est également prévu d'associer au conduit, un conduit annexe de même configuration, mais dont l'extrémité libre est disposée à un niveau inférieur de celui de l'extrémité du conduit principal, pour permettre la vidange du liquide hors de la cuve jusqu'à un niveau inférieur à celui rendu possible par ledit conduit principal.

On connaît également d'autres dispositifs d'alimentation séquencée fonctionnant sur le même principe. Ils comprennent au moins deux conduits dont les extrémités libres sont en forme de siphon, l'un dont l'embouchure est coupée en biais afin de pouvoir venir à fleur du fond de la cuve, et l'autre dont l'embouchure est apte à venir à fleur du fond du flotteur afin de permettre le vidage de ce dernier par siphonnage en fin de vidange de ladite cuve. On notera que le document US 2.965.122 prévoit de manière similaire un conduit de vidange par siphonnage du flotteur, qui débouche dans le conduit principal.

Les dispositifs précités sont très efficaces tout en étant d'une grande simplicité mécanique. Ils présentent toutefois certains inconvénients, dont les deux principaux sont d'une part qu'ils consomment une hauteur élevée au niveau de la station, rendant leur utilisation impossible dans certains cas de dénivelé, et d'autre part qu'il y a des risques qu'ils se trouvent dans une position stable nécessitant un vidage manuel du flotteur si un problème survient au niveau de l'amorçage ou du désamorçage du ou des tubes siphonnant le flotteur.

D'autre part, notamment pour le dispositif du type de celui décrit dans le document FR 2.690.955, les conduits de vidange, du fait de leur architecture, demeurent en grande partie émergés lors de l'élévation du niveau de liquide, ce qui contribue à nécessiter un flotteur de volume relativement important.

La présente invention a pour but de proposer un dispositif d'alimentation séquencée pour eaux brutes destiné à être utilisé dans les installations d'épuration, permettant de remédier aux divers inconvénients précités.

Le dispositif d'alimentation séquencée pour eaux brutes destiné à être utilisé dans les installations d'épuration selon l'invention, est du type comprenant, dans une cuve, un ensemble mobile comportant d'une part au moins un conduit de vidange coudé, coude vers le haut, dont une extrémité est aboutée à un raccord souple, tandis que l'autre, qui est associée à un flotteur submersible, présente une embouchure coupée en biais afin de lui permettre d'affleurer le fond de ladite cuve; et d'autre part au moins un conduit annexe destiné au vidage dudit flotteur, et il se caractérise essentiellement en ce que le ou les conduits de vidange présentent entre l'extrémité à abouter au raccord souple et le coude, une partie rectiligne d'axe sensiblement parallèle au plan de coupe de l'embouchure, afin de demeurer vides et, en grande partie, immergés lors de l'élévation du niveau de liquide et ainsi participer de manière constante, en association avec ledit flotteur, à la flottabilité de l'ensemble ; tandis que le ou lesdits conduits annexes de vidange dudit flotteur sont conçus aptes à permettre une vidange par gravité.

La partie rectiligne s'étend donc parallèlement au fond de la cuve et demeure totalement immergée lors du remplissage de la cuve.

Selon une caractéristique additionnelle du dispositif selon l'invention, le flotteur se présente sous la forme d'un caisson dans lequel débouche directement le conduit annexe de vidange, en sorte de permettre le vidage par gravité de celui-ci.

Selon une autre caractéristique additionnelle du dispositif selon l'invention, le ou les conduits de vidange de la cuve sont disposés latéralement au flotteur.

Cette caractéristique permet, en évitant au conduit d'avoir à enjamber le flotteur comme c'est le cas de dispositifs existants, surtout quand ceux-ci sont par nécessité de volume important, de limiter la hauteur de siphonnage et donc de limiter le tirage aval et ainsi la perte de hauteur globale du système.

Selon un mode de réalisation particulier du dispositif selon l'invention, il se présente sous la forme d'un ensemble mobile comprenant un châssis équipé dans sa partie arrière de deux bras permettant son articulation en pivotement autour d'un axe transversal et horizontal, ledit châssis comporte dans sa partie avant un caisson, constituant le flotteur, et qui vient de l'assemblage étanche de parois latérales, d'un fond et d'une partie de toit qui s'étend du côté desdits bras.

Selon une caractéristique additionnelle du mode de réalisation particulier du dispositif selon l'invention, le conduit annexe s'étend dans le caisson, contre le fond, pour déboucher à proximité de la paroi disposée à l'opposé des bras d'articulation.

Selon une autre caractéristique additionnelle du mode de réalisation particulier du dispositif selon l'invention, l'extrémité du conduit annexe, qui débouche dans le caisson, présente une embouchure biseautée en sorte que son ouverture soit orientée vers le haut.

Selon une autre caractéristique additionnelle du dispositif selon l'invention, l'embouchure du ou des conduits de vidange est conçue apte à plonger dans une cavité ménagée dans le fond de la cuve, lequel fond est conçu concave et convergent vers ladite cavité.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé:
- la figure 1 représente une vue schématique partielle en perspective d'un dispositif d'alimentation séquencée selon l'invention.
- la figure 2 représente une vue schématique partielle de profil et en coupe partielle du même dispositif dans deux positions différentes de travail.

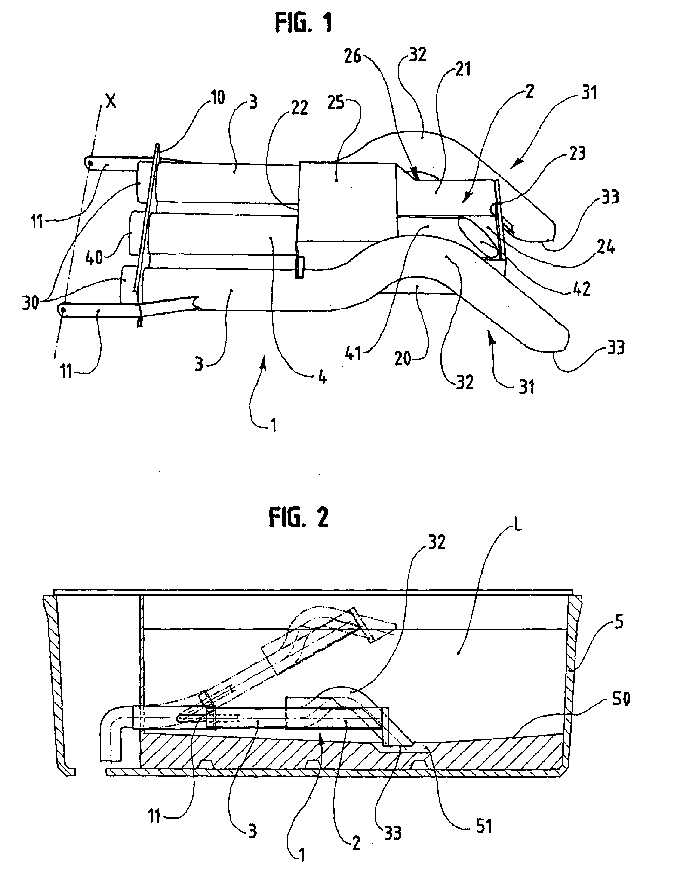

En référence à la figure 1, on peut voir qu'un dispositif d'alimentation séquencée destiné à être utilisé dans les installations d'épuration, notamment d'épuration biologique, selon l'invention, se présente sous la forme d'un ensemble mobile 1 comprenant un châssis 10 équipé dans sa partie arrière de deux bras 11 permettant son articulation en pivotement autour d'un axe transversal et horizontal X.

Le châssis 10 comporte dans sa partie avant un caisson 2 conformé en une cuve, et comprenant à cet effet deux parois latérales 20 et 21, une paroi arrière 22, du côté des bras 11, une paroi avant 23 et un fond 24, assemblés de manière étanche pour conférer au caisson 2 une certaine flottabilité.

On notera par ailleurs que le caisson 2 est partiellement fermé supérieurement par une paroi 25, assemblée de manière étanche aux parois 20, 21 et 22.

L'ensemble mobile 1 comprend également deux conduits 3, disposés chacun latéralement de part et d'autre du caisson 2, et qui présentent chacun, du côté des bras 11, une extrémité 30 destinée à être aboutée à un raccord souple, non représenté, tandis que l'autre extrémité 31 est coudée, coude 32 dirigé vers le haut, pour former en siphon.

L'ensemble mobile 1 comporte également un conduit annexe 4, disposé entre les deux conduits 3, dont une extrémité 40, du côté des bras 11, est destinée à être aboutée à un raccord souple, non représenté, tandis que l'autre extrémité 41, dont l'embouchure 42 est biseautée vers le haut, s'étend dans le caisson 2 au contact du fond 24 pour déboucher à proximité de la paroi avant 23.

En référence maintenant à la figure 2, on peut voir l'ensemble mobile 1 installé dans une cuve 5, et qui repose sur le fond 50 de celle-ci. On notera que lorsque la cuve 5 est vide, les conduits 3 et 4 sont dans une position sensiblement parallèle au fond 50.

On notera également que de manière avantageuse, dans le mode de réalisation représenté, le fond 50 de la cuve 5 n'est pas parfaitement plan, mais qu'il est légèrement creusé pour converger vers une cavité 51 dans laquelle plongent les embouchures 33 des conduits 3, lesquelles sont coupées en biais en sorte de pouvoir venir à fleur du fond 50 lorsque l'ensemble mobile repose.

On notera qu'il est parfaitement possible de configurer les embouchures 33 de manière différente, par une coupe autre qu'en biseau par exemple, dans la mesure où on prévoit une cavité 51 de forme apte à permettre l'aspiration du liquide L par de telles embouchures.

Sur cette figure 2 est également représenté, en traits discontinus, l'ensemble mobile 1 dans une position relevée lors de la montée du niveau de liquide L dans la cuve 5, sous l'effet de sa flottabilité.

La flottabilité de l'ensemble mobile 1 est assurée conjointement par le caisson 2 et par les conduits 3 et 4.

En effet, on peut constater que ces conduits 3 et 4, qui sont vides de liquides et demeurent pratiquement totalement immergés, participent à la flottabilité, contrairement aux dispositifs existants qui au surplus produisent un effet inverse en demeurant en grande partie émergés augmentant ainsi le poids de l'ensemble.

Par ailleurs, la partie immergée des conduits 3 et 4 restent sensiblement constante au fur et à mesure de l'élévation de l'ensemble mobile 1, en sorte que la flottabilité est constante. Par contre, dans les dispositifs existants, notamment ceux du type décrit dans le document FR 2.690.955, la partie immergée varie constamment, ce qui ne permet pas d'obtenir une flottabilité constante et nécessite de remédier à un flotteur de volume relativement important.

La flottabilité de l'ensemble mobile 1 permet d'élever les extrémités 31 des conduits 3, et de maintenir ces dernières à un niveau empêchant le liquide L d'y pénétrer par les embouchures 33.

Au-delà d'un certain angle d'inclinaison de l'ensemble mobile 1, c'est-à-dire lorsque le liquide L a atteint un certain niveau dans la cuve 5, le caisson 21 se remplit de liquide L puis coule, amorçant ainsi les siphons que constituent les extrémités 31 des conduits 3.

On notera que lors du remplissage du caisson 2, le liquide L pénètre dans ce dernier par deux passages 26 ménagés dans les parois latérales 20 et 21, se situant légèrement en deçà du point haut de l'intérieur des coudes 32, en sorte que l'enfoncement de l'ensemble mobile 1 entraîne l'amorçage immédiat des siphons.

On notera que la hauteur d'amorçage peut être réglée par l'intermédiaire d'un moyen de retenue, non représenté, constitué par exemple d'une chaîne de longueur ajustable, reliant l'ensemble mobile 1 au fond 50.

Par ailleurs, du fait que l'extrémité 41 du conduit 4 débouche à proximité de la paroi 23, il n'y a pas de risque que le caisson 2 se vide par le conduit 4 au fur et à mesure du remplissage.

Lorsque le caisson 2 est submergé et que l'ensemble mobile 1 repose sur le fond 50 de la cuve 5, le liquide L s'évacue par les conduits 3, ainsi que par le conduit 4 jusqu'au vidage de la cuve 5, et du caisson 2 par gravité au travers du conduit 4.

Contrairement à ce qui existe par ailleurs, le flotteur est vidé par gravité et non par siphonnage, ainsi quoiqu'il arrive, il n'y a pas de risque de désamorçage, et le caisson 2 est toujours vidé à chaque vidange de la cuve 5.

Après vidange de la cuve 5 et du caisson 2, un nouveau cycle peut se reproduire.

## Revendications

1. Dispositif d'alimentation séquencée pour eaux brutes destiné à être utilisé dans les installations d'épuration, du type comprenant, dans une cuve (5), un ensemble mobile (1) comportant d'une part au moins un conduit de vidange (3) coudé, coude (32) vers le haut, dont une extrémité (30) est aboutée à un raccord souple, tandis que l'autre (31), qui est associée à un flotteur submersible (2), présente une embouchure (33) coupée en biais afin de lui permettre d'affleurer le fond (50) de ladite cuve (5); et d'autre part au moins un conduit annexe (4) destiné au vidage dudit flotteur (2), **caractérisé en ce que** le ou les conduits (3) de vidange présentent entre l'extrémité (30) à abouter au raccord souple et le coude (32), une partie rectiligne d'axe sensiblement parallèle au plan de coupe de l'embouchure (33), afin de demeurer vides et, en grande partie, immergés lors de l'élévation du niveau de liquide (L) et ainsi participer de manière constante, en association avec ledit flotteur (2), à la flottabilité de l'ensemble ; tandis que le ou lesdits conduits annexes (4) de vidange dudit flotteur (2) sont conçus aptes à permettre une vidange par gravité.

2. Dispositif selon la revendication 1, **caractérisé en ce que** le flotteur se présente sous la forme d'un caisson (2) dans lequel débouche directement le conduit annexe de vidange (4), en sorte de permettre le vidage par gravité de celui-ci.

3. Dispositif selon la revendication 1 ou la revendication 2, **caractérisé en ce que** le ou les conduits de vidange (3) de la cuve (5) sont disposés latéralement au flotteur (2).

4. Dispositif selon l'une quelconque des revendications précédentes, **caractérisé en ce qu'**il se présente sous la forme d'un ensemble mobile (1) comprenant un châssis (10) équipé dans sa partie arrière de deux bras (11) permettant son articulation en pivotement autour d'un axe transversal et horizontal (X), ledit châssis (10) comporte dans sa partie avant un caisson (2), constituant le flotteur, et qui vient de l'assemblage étanche de parois latérales (20, 21, 22, 23), d'un fond (24) et d'une partie de toit (25) qui s'étend du côté desdits bras (11).

5. Dispositif selon la revendication 4, **caractérisé en ce que** le conduit annexe (4) s'étend dans le caisson (2), contre le fond (24), pour déboucher à proximité de la paroi (23) disposée à l'opposé des bras d'articulation (11).

6. Dispositif selon la revendication 5, **caractérisé en ce que** l'extrémité (41) du conduit annexe (4), qui débouche dans le caisson (2), présente une embouchure (42) biseautée en sorte que son ouverture soit orientée vers le haut.

7. Dispositif selon l'une quelconque des revendications précédentes, **caractérisé en ce que** l'embouchure (33) du ou des conduits de vidange (3) est conçue apte à plonger dans une cavité (51) ménagée dans le fond (50) de la cuve (5), lequel fond (5) est conçu concave et convergent vers ladite cavité (51).

## Claims

1. Sequenced waste water feeder for use in waste water treatment plants, of the type including, in a tank (5), a movable unit (1) comprising, on the one hand, at least one bent draining pipe (3), bend (32) oriented upwardly, one end (30) of which is joined end to end to a hose connection, whereas the other one (31), which is associated with a submersible floater (2), has an opening (33) cut slantwise in order to permit to the latter to be positioned at the level of the bottom (50) of said tank (5) ; and, on the other hand, at least one additional pipe (4) for the draining of said floater (2), **characterized in that** the draining pipe or pipes (3) have between the end (30) to be joined end to end to the hose connection and the bend (32), a rectilinear portion with an axis substantially parallel to the cross-sectional plane of the opening (33), in order to remain empty and, to a large extent, immersed during the raising of the level of the liquid (L) and thus participate constantly, in association with said floater (2), in the buoyancy of the unit; whereas said additional pipe or pipes (4) for draining said floater (2) are designed capable of permitting draining by gravity.

2. Device according to claim 1, **characterized in that** the floater is in the form of a box (2) in which is inserted directly the additional draining pipe (4), in order to permit the draining of the latter by gravity.

3. Device according to claim 1 or claim 2, **characterized in that** the pipe or pipes for the draining (3) of the tank (5) are arranged laterally to the floater (2).

4. Device according to any of the preceding claims, **characterized in that** it is in the form of a movable unit (1) including a frame (10) provided in its rear portion with two arms (11) permitting its pivoting articulation around a transversal and horizontal axis (X), said frame (10) including in its front portion a box (2), constituting the floater, and obtained by watertight assembling of side walls (20, 21, 22, 23), of a bottom (24) and of a roof portion (25) extending on the side of said arms (11).

5. Device according to claim 4, **characterized in that** the additional pipe (4) extends in the box (2), against the bottom (24), in order to emerge in the vicinity of the wall (23) arranged opposite the articulation arms (11).

6. Device according to claim 5, **characterized in that** the end (41) of the additional pipe (4), which ends into the box (2), has a bevelled opening (42) so that its aperture is oriented upward.

7. Device according to any of the preceding claims, **characterized in that** the opening (33) of the draining pipe or pipes (3) is designed capable of plunging in a cavity (51) provided for in the bottom (50) of the tank (5), which bottom (5) is designed concave and convergent toward said cavity (51).

## Patentansprüche

1. Vorrichtung für sequentielle Abwasserzufuhr zum Gebrauch in Kläranlagen, der Art umfassend in einem Behälter (5) eine bewegliche Gesamtheit (1), umfassend, einerseits, wenigstens eine gebogene Entleerungsleitung (3), wobei der Bogen (32) nach oben zeigt, dessen eine Ende (30) an einem biegsamen Anschlußstück stumpf aneinander gefügt ist, während das andere (31), das einem tauchfähigen Schwimmer (2) zugeordnet ist, ein Mundstück (33) aufweist, das schräg abgeschnitten ist, um ihm zu erlauben, mit dem Boden (50) des besagten Behälters (5) flüchtig zu sein, und, andererseits, wenigstens eine Nebenleitung (4), vorgesehen für die Entleerung des besagten Schwimmers (2), **dadurch gekennzeichnet, daß** die Entleerungsleitung oder -leitungen (3) zwischen dem an dem biegsamen Anschlußstück aneinander zu fügenden Ende (30) und dem Bogen (32) einen geradlinigen Teil mit einer Achse aufweisen, die zu der Schnittebene des Mundstückes (33) im wesentlichen parallel ist, damit sie leer und bei der Erhöhung des Flüssigkeitspegels (L) größtenteils versenkt bleiben und so auf konstante Art und Weise, in Verbindung mit dem besagten Schwimmer (2), an der Schwimmfähigkeit der Gesamtheit teilnehmen, während die besagte zusätliche Entleerungsleitung oder -leitungen (4) des besagten Schwimmers (2) geeignet geplant sind, um eine Entleerung durch Schwerkraft zu erlauben.

2. Vorrichtung nach Anspruch 1, **dadurch gekennzeichnet, daß** der Schwimmer als ein Kasten (2) ausgestaltet ist, in dem unmittelbar die zusätzliche Entleerungsleitung (4) mündet, derart, um die Entleerung derselben durch Schwerkraft zu erlauben.

3. Vorrichtung nach Anspruch 1 oder Anspruch 2, **dadurch gekennzeichnet, daß** die Entleerungsleitung oder -leitungen (3) des Behälters (5) seitlich am Schwimmer (2) angeordnet sind.

4. Vorrichtung nach irgendeinem der vorgehenden Ansprüche, **dadurch gekennzeichnet, daß** sie als eine bewegliche Gesamtheit (1) ausgestaltet ist, umfassend einen Rahmen (10), der in seinem hinteren Teil mit zwei Armen (11) ausgestattet ist, die seine gelenkige Verbindung in Schwenkung um eine quer verlaufende und horizontale Achse (X) erlauben, wobei der besagte Rahmen (10) in seinem vorderen Teil einen Kasten (2) umfaßt, der den Schwimmer bildet und durch die wasserdichte Zusammensetzung der seitlichen Wände (20, 21, 22, 23), eines Bodens (24) und eines Dachteils (25) zustandekommt, der sich an der Seite der besagten Arme (11) erstreckt.

5. Vorrichtung nach Anspruch 4, **dadurch gekennzeichnet, daß** die Nebenleitung (4) sich in dem Kasten (2) gegen den Boden (24) erstreckt, um nahe bei der Wand (23) zu münden, die entgegengesetzt zu den Gelenkarmen (11) angeordnet ist.

6. Vorrichtung nach Anspruch 5, **dadurch gekennzeichnet, daß** das Ende (41) der Nebenleitung (4), die in dem Kasten (2) mündet, eine abgeschrägte Mündung (42) aufweist, derart, daß ihre Öffnung nach oben gerichtet ist.

7. Vorrichtung nach irgendeinem der vorgehenden Ansprüche, **dadurch gekennzeichnet, daß** die Mündung (33) der Entleerungsleitung oder -leitungen (3) geeignet geplant ist, um in einen Hohlraum (51) einzutauchen, der im Boden (50) des Behälters (5) vorgesehen ist, wobei der Boden (5) nach innen gewölbt und in Richtung des besagten Hohlraums (51) konvergent geplant ist.
